# DEMANDE DE BREVET EUROPEEN

(11) **EP 1 930 196 A1**
(43) Date de publication de la demande: **11.06.2008**
(21) Numéro de dépôt: 07350012.6
(22) Date de dépôt: 28.11.2007
(51) Int. Cl.: B60J 5/10

(54) **Véhicule monocorps ou bicorps à toit à élément mobile**

(30) Priorité: 05.12.2006 FR 0610599
(71) Demandeur: Heuliez, 79140 Cerizay (FR)
(72) Inventeur: Guillez, Jean Marc, 79140 Cirières (FR)
(74) Mandataire: Tournel, Jean Louis

(57) **Abrégé**

Véhicule monocorps ou bicorps à élément de couverture mobile en vue de découvrir au moins la zone de coffre, ce véhicule étant caractérisé en ce que le véhicule comporte un portillon (110) arrière dont la base est au niveau du plancher du véhicule et le bord arrière (111) de l'élément de couverture mobile jouxte le portillon dans une zone (112) de jonction située entre la ligne (113) de caisse et le niveau (114) du toit.

## Description

L'invention se rapporte à un véhicule à un toit à élément mobile.

Le toit à élément mobile est connu de longue date.

Par toit à élément mobile, on comprendra un toit dont une partie de la surface est mobile à l'inverse des toits dit mobiles qui se rétractent entièrement dans le coffre ou à l'arrière du véhicule. Ces toits à élément mobile permettent de découvrir une partie de l'habitacle.

La partie découverte est souvent d'étendue réduite. Elle se situe généralement à l'avant du toit. La partie mobile est bien souvent déplacée vers l'arrière en sorte que seuls les passagers avants profitent de ce dispositif.

Lorsque l'élément de toit mobile est déplacé, une circulation d'air se produit à l'intérieur du véhicule, ce qui provoque des turbulences qui sont gênantes pour les passagers arrières. Il est donc connu de prévoir sur le bord avant de l'ouverture découverte, un déflecteur d'air fixé à demeure sur le cadre bordant l'ouverture fermée par cet élément de toit mobile.

L'élément mobile se déplace entre deux arches.

Lorsque les sièges arrières de ces véhicules monocorps ou bicorps sont retirés ou rabattus, le coffre offre alors un volume de chargement non négligeable toutefois la dimension des objets pouvant être transportés dépend de la taille de l'entrée du coffre.

On connait un véhicule EP-A- 989009 comprenant une partie de toit souple constitué de lamelles qui se rangent dans un caisson situé à l'arrière du véhicule. La vitre arrière du véhicule est indépendante et se loge dans le portillon. L'épaisseur du portillon doit être importante pour loger la vitre arrière et la cassette.

L'invention propose une solution simple permettant d'augmenter la possibilité de charge ou de faciliter le chargement du coffre par exemple dans une utilisation pour les loisirs.

A cet effet, l'invention se rapporte à un véhicule monocorps ou bicorps à élément de couverture mobile en vue de découvrir au moins la zone de coffre, ce véhicule étant caractérisé en ce que le véhicule comporte un portillon arrière dont la base est au niveau du plancher du véhicule et l'élément de couverture comporte à l'avant une partie souple ou à lamelles et à l'arrière une partie rigide avec le bord arrière qui jouxte le portillon dans une zone de jonction située entre la ligne de caisse et le niveau du toit, l'élément de toit se déplaçant vers l'avant pour découvrir le véhicule.

L'invention sera bien comprise à l'aide de la description ci après faite à titre d'exemple non limitatif en regard du dessin qui représente :

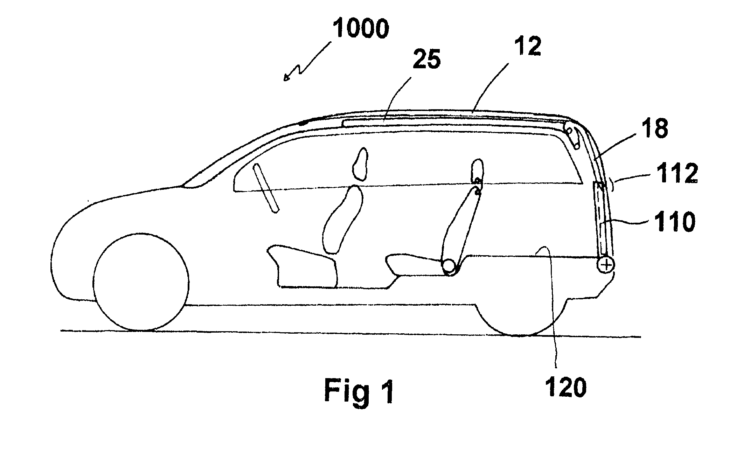

FIG 1 : Vue d'un véhicule selon l'invention , le toit étant fermé
FIG 2A: Vue du véhicule selon l'invention en cours de chargement d'un « quad »
FIG 2B : Vue du véhicule de la figure 2 chargée.
FIG 3 : Le véhicule de la figure 1 de ¾ arrière avec la cinématique de fonctionnement.
FIG 4 :Une variante d'un véhicule de la figure 3.
FIG 5 : Le véhicule chargé d'un vélo tout en préservant les places arrières
FIG 6 : le véhicule selon lequel on a symbolisé par deux rectangles les capacités de chargement.
FIG 7 : vue éclatée d'un toit
FIG 8a à FIG8c :Cinématique de déplacement de la partie arrière du toit.

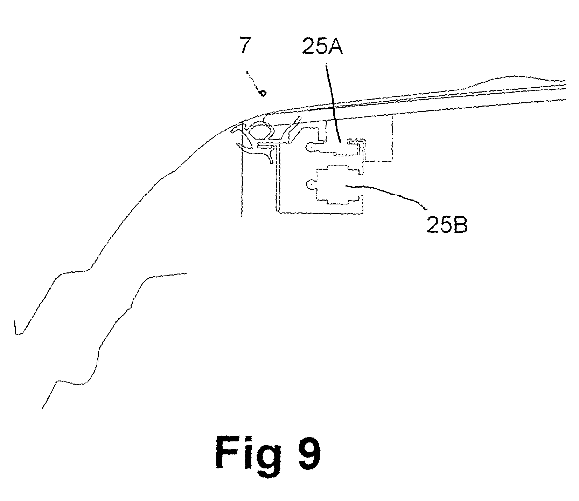

FIG 9 coupe transversale montrant les rails de guidage.

En se reportant au dessin, on voit un véhicule 1000 monocorps ou bicorps à élément 100 de couverture mobile en vue de découvrir au moins la zone de coffre.

Contrairement aux véhicules tricorps, la partie de toit surplombant l'habitacle des véhicules monocorps ou bicorps se prolonge sensiblement jusqu'à la verticale passant par le pare choc arrière alors que dans les véhicules tricorps le toit s'arrête sensiblement au niveau des dossiers des sièges arrières.

Selon une caractéristique, le véhicule comporte un portillon 110 arrière dont la base se situe au niveau du plancher du véhicule et l'élément de couverture comporte à l'avant une partie souple ou à lamelles et à l'arrière une partie rigide formant dont le bord 111 arrière, en position fermée, jouxte le portillon dans une zone 112 de jonction située entre la ligne de caisse 113 et le niveau du toit 114.

L'élément de couverture se déplace vers l'avant pour découvrir le véhicule.

La partie souple est solidaire de la partie arrière rigide.

La couverture souple se plie en accordéon et se positionne au dessus de la zone de l'habitacle réservée aux passagers avants alors que la partie rigide se positionne au dessus de la zone d'habitacle réservée aux passagers arrières et forme un déflecteur.

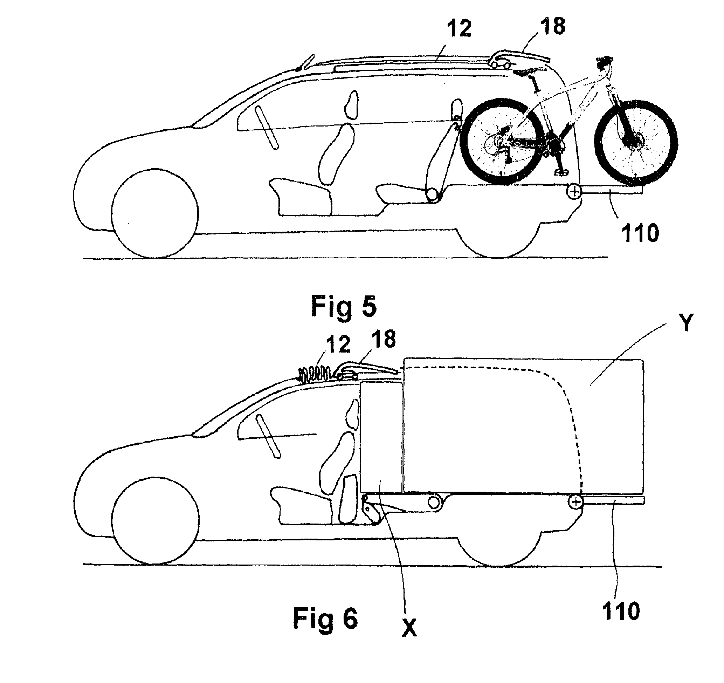

Lorsque le véhicule est découvert, on a donc une première zone couverte par la partie souple, une deuxième zone couverte par la partie rigide qui surplombe alors au moins partiellement la zone des passagers avants et/ou arrières et une zone de chargement arrière totalement découverte. Cela apparaît à la figure 6 où on a délimité les zones X et Y de chargement.

L'élément de couverture mobile est solidaire de la caisse et coulisse vers l'avant du véhicule pour découvrir la zone de chargement.

Le portillon pivote autour d'un axe vertical ( version non représentée) situé à droite ou à gauche du portillon ou il pivote autour d'un axe horizontal 115 situé à la base du portillon. Il existe alors une articulation entre le plancher et le portillon.

Ce portillon intègre ou non une vitre 116 escamotable dans l'épaisseur du portillon.

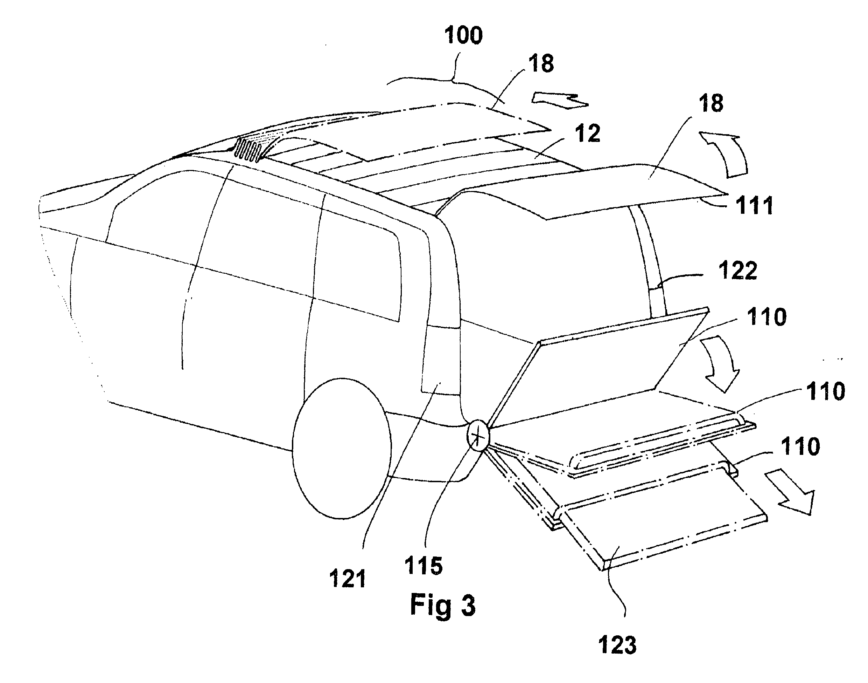

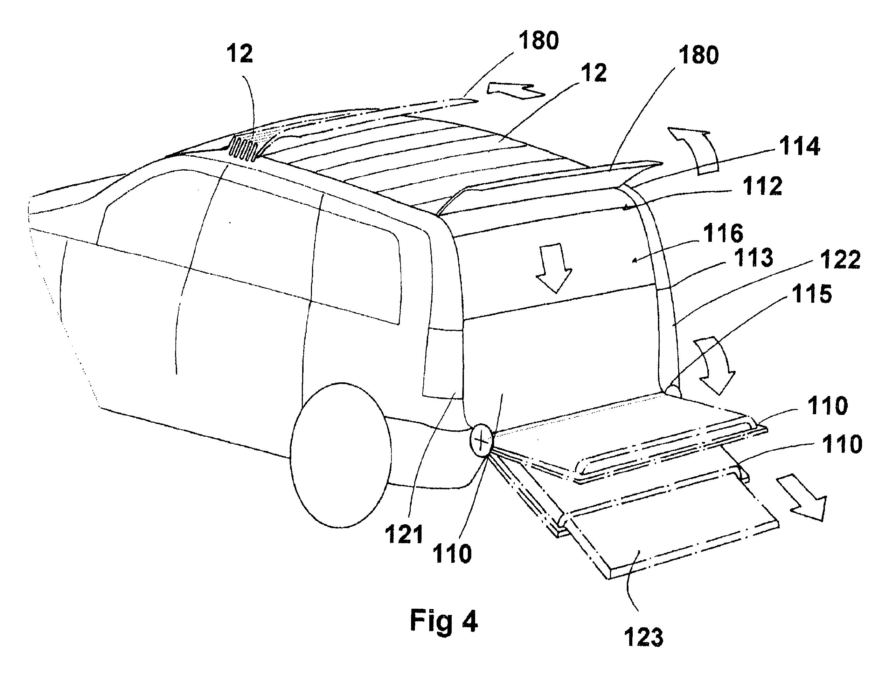

Lorsque le portillon comporte une vitre escamotable, l'arrière 111 de la partie coulissante de la toiture s'appuie sur le haut de la vitre escamotable (figure 4) lorsque celle ci est sortie de son logement. Bien évidemment si ce portillon est dépourvu en partie supérieure d'une vitre escamotable figure 3, l'arrière de la partie coulissante s'appuiera sur le haut du portillon.

Ainsi lorsque le portillon est ouvert et l'élément de couverture en position d'ouverture, La zone de chargement est délimitée par le plancher 120 et les deux parois latérales 121, 122 du véhicule de sorte que le chargement n'est pas limité en hauteur. En particulier la personne effectuant le chargement peut rester sur le véhicule à charger lors de son chargement.

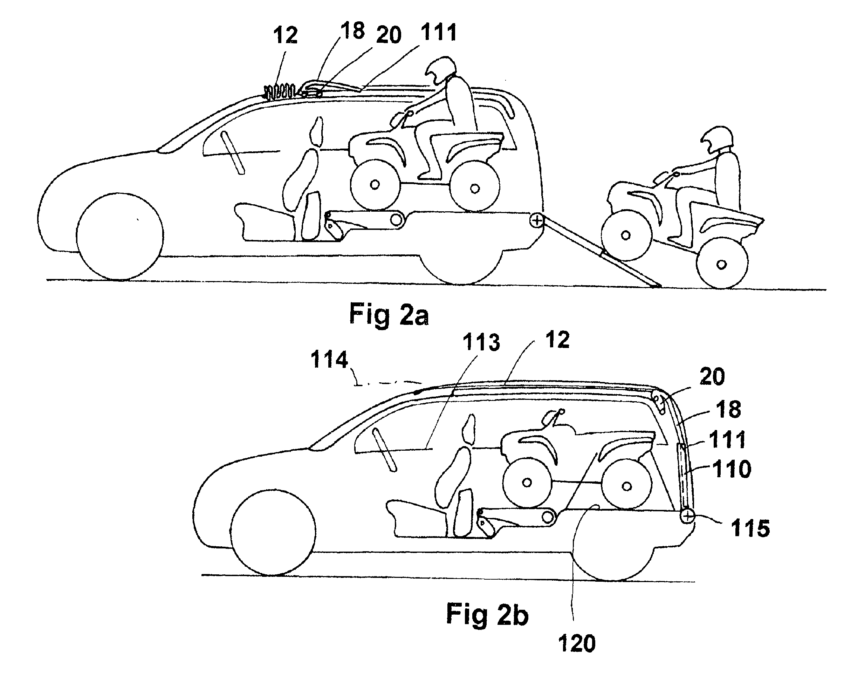

Elle peut également accompagner le chargement en montant sur le plancher et en s'y tenant debout. On voit en figure 2A que la tête du pilote du véhicule type « quad » ou moto dépasse largement le toit du véhicule.

Cette solution offre aussi un intérêt pour le transport des handicapés car on peut découvrir le toit le temps nécessaire à monter un fauteuil roulant dans le véhicule. La personne qui pousse le fauteuil peut ainsi monter sur la zone de chargement. Lorsque le fauteuil est installé, l'élément de couverture mobile peut être ramené en position de couverture de l'espace de chargement et le portillon refermé (figure 2b).

Le toit se présente sous la forme d'une coque s'étendant depuis la traverse 6 de pare brise vers l'arrière pour être fixée sur des zones d'arrimage du véhicule.

De préférence, cette partie 100 coulissante est constituée par une toile 12 souple guidée latéralement. Cette toile souple se prolonge vers l'arrière par une partie rigide qui peut être un girafon 180 ou une lunette arrière 18 transparente.

Le terme girafon est utilisé dans le domaine de l'automobile pour désigner un volet basculant autour d'un axe horizontal.

Avantageusement, le portillon 110 a une position fixe d'ouverture telle que le portillon se trouve dans le prolongement du plancher et dans un plan parallèle au plan du plancher c'est à dire sensiblement horizontal. Cette solution apparaît aux figures 5 et 6. Le portillon peut alors reprendre une partie de la charge qui dépasse du gabarit traditionnel du véhicule roulant.

Avantageusement, en combinaison ou non avec la position d'ouverture précédente, le portillon a une position d'ouverture inclinée vers le bas et l'arrière telle que cela apparaît aux figures 2A, 3 et 4.

Dans cette dernière solution, il est intéressant d'intégrer dans l'épaisseur du portillon, une rampe télescopique 123.

A la figure 3 on voit cette rampe télescopique ainsi que les trois positions singulières que peut prendre le portillon.

On peut également intégrer une rampe dans le plancher du véhicule.

On voit ici que le toit mobile comporte une couverture souple dont le bord arrière est lié à la lunette arrière.

La figure 4 diffère de la figure 3 en ce que le bord arrière de la couverture simple est lié à un girafon .Une flèche montre le mouvement de la vitre arrière qui vient se loger dans le portillon.

Le mouvement de l'élément de couverture et/ou celui du portillon seront, de préférence motorisés. Ils seront successifs ou simultanés. Ils pourront être, avantageusement commandés à distance par l'utilisateur souhaitant charger son véhicule rapidement. Il sera alors prévu une commande à distance.

C'est l'arrêt du moteur et/ou un verrouillage mécanique par complément de forme qui verrouillent la position du portillon en sa position requise.

La figure 5 montre tout l'intérêt du portillon en position horizontale dans le prolongement du plancher. En effet le véhicule conserve les deux rangées de sièges tout en permettant de transporter un vélo. Le portillon sert d'appui pour la roue avant du vélo qui se trouve en porte à faux par rapport au pare choc arrière.

La figure 6 montre les capacités de chargement. Le caisson X montre un volume de chargement située à l'arrière du siège avant dont la hauteur est limitée par le toit. A l'arrière de ce volume, un second volume Y dont la hauteur n'est plus limitée et dont le bord arrière se positionne au niveau du bord supérieur du portillon placé en position horizontale.

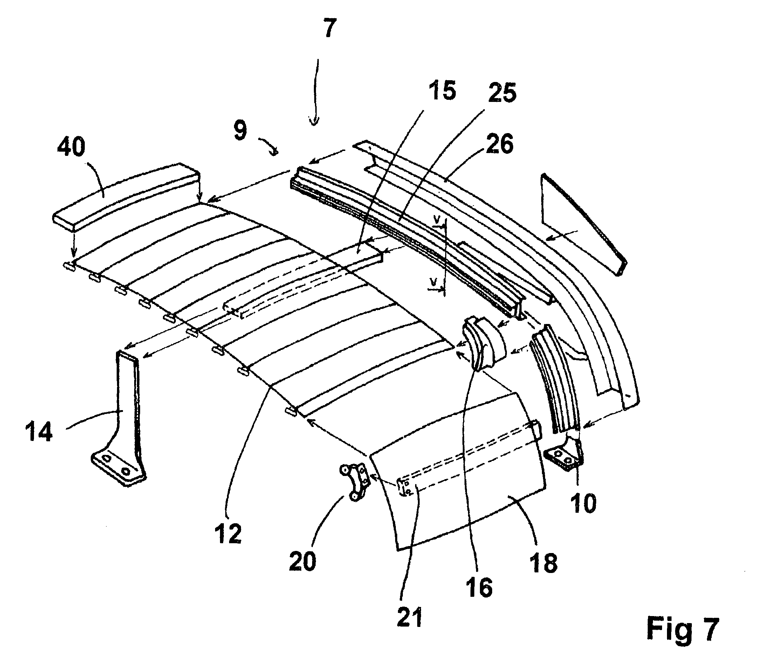

Dans une forme de réalisation détaillée d'un élément de couverture sur la figure 7, le toit rapporté comprend deux arches 7,7', une à droite et une à gauche fixées définitivement à l'avant sur les zones d'arrimage de la traverse du pare-brise et à l'arrière sur au moins un couple de zones d'arrimage. Ces derniers couples de zones d'arrimage se situent sensiblement au niveau de la ligne de caisse.

Ces arches comprennent des zones de fixation avants 9 et arrières 10 voire intermédiaires 11.

Des pieds 14 portant des zones de fixation intermédiaire 11 peuvent être prévus en position intermédiaire pour rigidifier le toit.

Des traverses 15 reliant ces pieds peuvent contribuer à augmenter encore cette rigidité.

Entre les arches, est montée une structure 12 mobile telle une toile souple déplaçable entre une position de couverture et une position dégagée.

Pour découvrir la voiture, la toile 12 est repliée par translation.

Le toit comprend donc une partie 12,18,180 mobile pour dégager une ouverture inscrite dans l'étendue du toit.

Ce toit à élément mobile comprend donc deux arches 7 qui s'étendent depuis la traverse de pare-brise vers l'arrière du véhicule et sensiblement jusqu'au niveau de la ligne de caisse. Le cintre de l'arche est variable et dans l'exemple représenté le cintre est plus accentué vers l'arrière.

Cette arche 7 peut être réalisée en une ou plusieurs parties, ici en deux parties, reliées par une jonction 16.

Il s'agit d'un ou plusieurs profilés cintrés.

La jonction sert également à présenter un court rail 17 secondaire qui sert au guidage du chariot arrière.

Entre ces arches 7 sont disposées une partie 12 coulissante et une lunette arrière 18 L'arrière de la partie 12 coulissante est liée à la lunette arrière 18 ou un girafon 180 qui est mobile en translation et cet ensemble 100 constitué par la partie coulissante 12 et la lunette arrière 18 ou le girafon 180 peut être déplacé, par translation vers l'avant du toit.

En cette position avant (figure 2 A et 6) de cet ensemble, la lunette arrière 18 ou le girafon 180 forme alors avantageusement un déflecteur.

Cette lunette arrière est portée par un couple ou jeu de chariots 20 dit arrière.

La liaison avec le chariot peut être rigide ou articulée afin de modifier l'orientation de la lunette lorsque celle ci a une fonction de déflecteur.

Le bord avant de la partie coulissante peut être déplacé vers l'arrière et rapproché de la lunette arrière 18. Ce bord avant est alors porté par un jeu de chariots.

Cette partie coulissante peut être un matériau souple tel une toile ou constituée de panneaux rigides disposés les uns derrière les autres qui par un mouvement de translation viennent se superposer ou se positionner pour former des ondes.

Pour réaliser ce déplacement, la partie coulissante comprend un premier jeu de chariots fixé à l'avant de la partie coulissante et un second jeu 20 de chariots solidaire de la lunette arrière. Les chariots droits et gauches peuvent être reliés transversalement par une traverse 21, 40 ou directement par la vitre arrière de la lunette arrière.

On a représenté des chariots 20 à deux roues.

Pour guider ces chariots, les arches comprennent donc des rails 25 de guidage dans lesquels coulissent éventuellement aussi des galets du toit souple ou les chariots.

On préférera une piste 25A pour la toile souple et une piste 25B pour les chariots 20 solidaire de la lunette arrière rigide.

Comme indiqué plus haut, la lunette arrière coulisse, et il peut être prévu en partie arrière de l'arche un appui exclusif pour les bords longitudinaux de la lunette arrière ainsi qu'un court tronçon de rail 17 pour le chariot arrière. Le court tronçon de rail 17 possède une courbure forte permettant l'ouverture de la lunette par pivotement autour du centre de courbure.

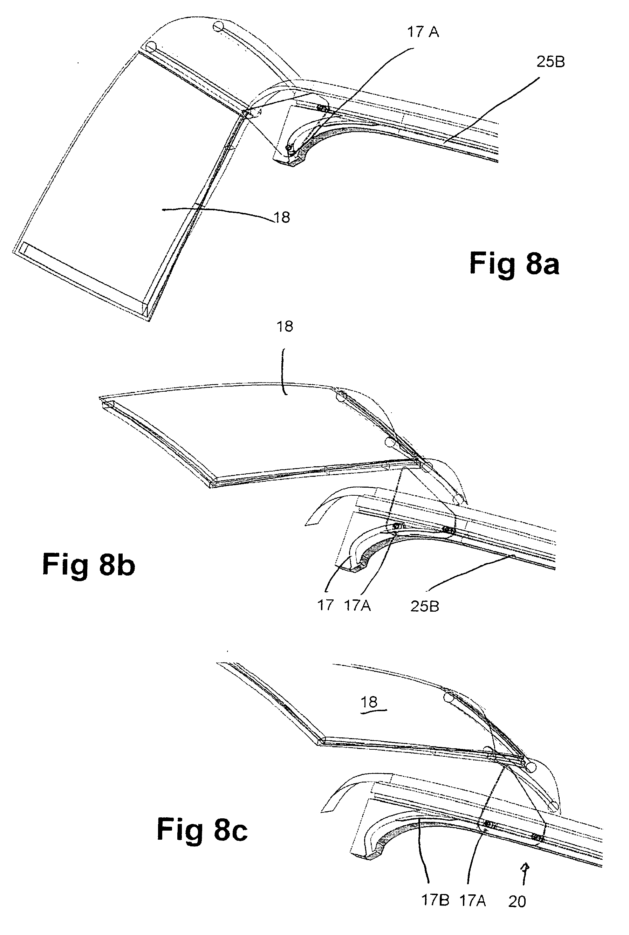

En figures 8a à 8c, on a représenté la cinétique de déplacement de la lunette arrière lorsqu'elle se déplace vers l'avant.

Le galet avant est guidé sur un premier rail qui se trouve dans le prolongement du rail principal 25B. Le galet arrière est guidé sur le rail courbe 17.Un aiguillage formé d'un pion 17A et d'une nervure 17B permet lors du déplacement vers l'arrière de guider la roue arrière du chariot vers le tronçon 17.

Cette arche est réalisée à partir d'un profilé cintré. Ce profilé cintré constitue la structure portante du toit et il est fixé aux deux extrémités sur la caisse du véhicule.

## Revendications

1. Véhicule monocorps ou bicorps à élément (100) de couverture mobile en vue de découvrir au moins la zone de coffre ce véhicule étant **caractérisé en ce qu'**il comporte comporte un portillon (110) arrière dont la base est au niveau du plancher du véhicule avec l'élément de couverture comportant à l'avant une partie souple ou à lamelles et à l'arrière une partie rigide dont le bord arrière (111), en position fermée, jouxte le portillon dans une zone (112) de jonction située entre la ligne (113) de caisse et le niveau (114) du toit, l'élément de couverture se déplaçant vers l'avant du véhicule pour découvrir la partie arrière

2. Véhicule monocorps ou bicorps selon la revendication 1 **caractérisé en ce** lorsque le véhicule est découvert, la zone habitacle est scindée en une première zone couverte par la partie souple, une deuxième zone couverte par la partie rigide qui surplombe alors au moins partiellement la zone des passagers avants et/ou arrières et une zone de chargement arrière totalement découverte.

3. Véhicule monocorps ou bicorps selon la revendication 1 **caractérisé en ce que** l'élément de toit mobile coulisse vers l'avant.

4. Véhicule monocorps ou bicorps selon la revendication 1 ou 2 caratérisé en ce que la partie souple et solidaire de la partie rigide qui est une lunette arrière ou un girafon.

5. Véhicule monocorps ou bicorps selon la revendication 4 **caractérisé en ce que** le girafon ou la lunette arrière est porté par au moins un chariot (20) guidé en translation.

6. Véhicule monocorps ou bicorps selon la revendication 1 **caractérisé en ce qu'**à l'état ouvert du toit la partie rigide du toit forme déflecteur.

7. Véhicule monocorps ou bicorps selon la revendication 1 **caractérisé en ce que** le portillon s'ouvre autour d'un axe horizontal situé au niveau du plancher du véhicule.

8. Véhicule monocorps ou bicorps selon la revendication 7 **caractérisé en ce que** le portillon a une position d'ouverture fixe sensiblement horizontale et/ou une position d'ouverture inclinée vers l'arrière et le bas.

9. Véhicule monocorps ou bicorps selon l'une quelconque des revendications 6 ou 7 **caractérisé en ce que** le portillon comprend une rampe télescopique (123).

10. Véhicule monocorps ou bicorps selon l'une quelconque des revendications précédentes **caractérisé en ce que** le mouvement du portillon et/ou de l'élément de couverture mobile sont motorisés.
